(19)

Europäisches
Patentamt
European
Patent Office
Office européen
des brevets

(11) **EP 4 395 093 A1**

(12) **EUROPEAN PATENT APPLICATION**

(43) Date of publication:
**03.07.2024 Bulletin 2024/27**

(21) Application number: **22217133.2**

(22) Date of filing: **29.12.2022**

(51) International Patent Classification (IPC):
**H02H 3/08** *(2006.01)*          **H02H 3/093** *(2006.01)*
**H02H 3/10** *(2006.01)*

(52) Cooperative Patent Classification (CPC):
**H02H 3/093; H02H 3/105;** H02H 3/04; H02H 9/04

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **ABB SCHWEIZ AG**
**5400 Baden (CH)**

(72) Inventors:
• **Wahlroos, Ari**
 **65320 Vaasa (FI)**
• **Altonen, Janne**
 **33720 Tampere (FI)**
• **Vanhala, Kari**
 **65320 Vaasa (FI)**
• **Lehesvuo, Veikko**
 **65320 Vaasa (FI)**

(74) Representative: **Kolster Oy Ab**
**Salmisaarenaukio 1**
**P.O. Box 204**
**00181 Helsinki (FI)**

(54) **METHOD AND APPARATUS FOR PROTECTION IN ELECTRIC SYSTEM**

(57)    A method and apparatus for protection in an electric system, the apparatus (30) being configured to monitor a signal indicative of a characteristic quantity in the electric system (10, 20, F1, F2, F3), count, by a time counter, a time during which a magnitude of the monitored signal exceeds a first threshold value, in response to the magnitude of the monitored signal being equal to or smaller than a second threshold value, calculate an operate time on the basis of the magnitude of the monitored signal, and in response to the magnitude of the monitored signal being greater than the second threshold value, calculate the operate time on the basis of the second threshold value, and in response to the time counted by the time counter being equal to or exceeding the calculated operate time, signal a trip condition.

Fig. 1

**Description**

FIELD OF THE INVENTION

The present invention relates to protection in an electric system.

BACKGROUND

In electric systems, such as electric networks or parts thereof, detection and/or elimination of faults and other adverse conditions is important to the safety and reliability of such systems, for example. For this purpose, e.g. electric transmission and distribution networks may be equipped with protection systems that can detect and/or eliminate such faults or other adverse conditions.

An example of such protection systems is overcurrent protection equipment. Overcurrent protection may be used for protection against e.g. short-circuit faults, earth faults (ground faults) and overload conditions. Overcurrent protection may be implemented by means of fuses or circuit breakers or other suitable switching equipment controlled by protective relay equipment, for instance. Other examples include e.g. undercurrent, overvoltage and undervoltage protection equipment. The characteristic quantity (actuating quantity) or quantities of the protection may thus vary.

An overcurrent relay, for example, is a type of protective relay which operates when the monitored current(s) exceeds a predetermined value. Several types of overcurrent relays exist such as definite time overcurrent (DTOC) relay, instantaneous overcurrent relay, inverse-time overcurrent (ITOC) relay and inverse definite minimum time (IDMT) relay.

An inverse definite minimum time (IDMT) relay has a combined characteristics of definite time and inverse time relays. Thus, when the IDMT relay operates as an inverse time relay, the relay operating time is inversely proportional to the magnitude of the current, and when the relay acts as a definite time relay, the operating time is predefined. The IDMT relay operates according to its characteristics curve, which may be user defined or based on a standard selected for the particular relay operation. Such standards can be e.g. IEEE, IEC, ANSI or IAC. An IDMT relay functionality, or generally protection based on an IDMT characteristic curve may be applied to various characteristic quantities of protection, such as current or voltage, for example.

An inverse definite minimum time (IDMT) relay functionality may be based on an integrating (aggregating signal levels) timer, i.e. from the beginning, the magnitude of a certain signal level and duration is calculated, and then such operating time fragments, or their surface areas, are added together, and when the combined surface area of all signals reaches the desired operating time, then the operation may be triggered. In other words, this kind of timer may be based on the fact that even a strongly variable input signal produces different surface areas, and especially a signal peak at the beginning can cause such timer to progress rapidly. A problem related to such solution is that it may be very difficult to predict in advance the resulting operating time if the signal level fluctuates strongly. An accurate calculation would require to know how long each signal magnitude level lasts, so that one could accurately calculate the theoretical operating time.

BRIEF DESCRIPTION

An object of the present invention is thus to provide a method and an apparatus for implementing the method so as to overcome the above problem or at least to alleviate it. The object of the invention is achieved by a method, a computer readable medium and an apparatus, which are characterized by what is stated in the independent claims. The preferred embodiments of the invention are disclosed in the dependent claims.

The invention is based on the idea of counting a time during which a magnitude of a monitored signal fulfils a predefined condition and essentially simultaneously calculating an operate time, and comparing the counted time with the calculated operate time to determine whether a trip condition exists.

An advantage of the solution is that it can provide a simple and accurate way for implementing the protection for an electric system.

BRIEF DESCRIPTION OF THE DRAWINGS

In the following the invention will be described in greater detail by means of preferred embodiments with reference to the attached drawings, in which

Figure 1 shows an example of an electric network according to an embodiment;
Figure 2 shows a diagram according to an embodiment;
Figure 3 shows a diagram according to an embodiment;

Figure 4 shows a diagram illustrating an embodiment;
Figure 5 shows a diagram illustrating an embodiment;
Figure 6 shows a diagram illustrating an embodiment;
Figure 7 shows a diagram illustrating an embodiment; and
Figure 8 shows a diagram according to an embodiment.

DETAILED DESCRIPTION

The following embodiments are exemplary. Although the description may refer to "an", "one", or "some" embodiment(s) in several locations, this does not necessarily mean that each such reference is to the same embodiment(s), or that the feature only applies to a single embodiment, for example. Single features of different embodiments may also be combined to provide other embodiments. Generally, all terms and expressions used should be interpreted broadly and they are intended to illustrate, not to restrict, the embodiments. The figures only show components necessary for understanding the various embodiments. The number and/or configuration of the various elements, and generally their implementation, could vary from the examples shown in the figures.

Different embodiments and examples may be described below using single units, models, equipment and memory, for example, without restricting the embodiments/examples to such a solution. Concepts called cloud computing and/or virtualization may be used. The virtualization may allow a single physical computing device to host one or more instances of virtual machines that appear and operate as independent computing devices, so that a single physical computing device can create, maintain, delete, or otherwise manage virtual machines in a dynamic manner. It is also possible that device operations will be distributed among a plurality of servers, nodes, devices or hosts. In possible cloud computing network devices, computing devices and/or storage devices may provide shared resources. Some other technology advancements, such as Software-Defined Networking (SDN), may cause one or more of the functionalities described below to be migrated to any corresponding abstraction or apparatus or device. Therefore, all words and expressions should be interpreted broadly, and they are intended to illustrate, not to restrict, the embodiment in question.

The application of the various embodiments described herein is not limited to any specific system, but it can be used in connection with protection of various electric systems, such as three-phase electric systems. The protection may be used for protection of the electric system, or one or more components thereof, against e.g. short-circuit faults, earth faults (ground faults) and/or overload conditions. As an example, the embodiments can be utilized in unearthed electric networks with an unearthed or isolated neutral, i.e. which have no intentional neutral point grounding but are grounded only by the natural phase-to-earth capacitances of the network. As another example, the embodiments can be utilized in compensated networks with a compensated neutral, also known as a resonant earthed networks, where compensation of the fault current is achieved by installing one or more (Petersen) coils into neutral point(s) of the system. As a yet another example, the various embodiments can be utilized in impedance earthed networks with a neutral point provided with a resistance and/or reactance grounding, such as a high resistance and/or reactance grounding. In such networks with a high resistance earthed neutral point the value of the grounding resistance may be selected such that its value essentially corresponds to a resulting capacitive reactance of phase-to-earth admittances (~capacitances) of the galvanically connected network, for instance, such that an earth-fault current is limited approximately to a value equal to or slightly greater than the uncompensated capacitive earth-fault current of the network. An electric network, in which the various embodiments may be implemented, can be an electric power transmission or distribution network or a component thereof, for example, and may comprise several electric lines or sections. The electric network may have a radial configuration supplied from one point thereof or a loop configuration comprising one or more loops and supplied from two or more points, for instance. Moreover, the use of the various embodiments is not limited to systems employing 50 Hz or 60 Hz fundamental frequencies or to any specific voltage level.

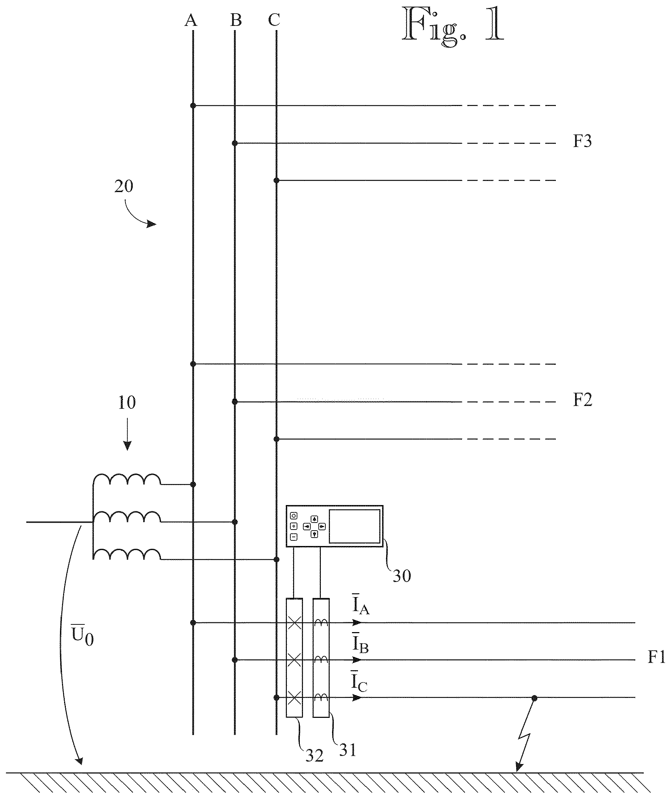

Figure 1 is a simplified diagram of an exemplary electric system showing some equipment (e.g. apparatuses, devices, nodes) and functional entities, whose implementation and/or number and/or configuration may differ from what is shown in the example of Figure 1. Such a system may also comprise other equipment, functional entities and/or structures, some of which used in or for big data, data management, and communication in the system or in any part of the system, for example. Also e.g. any communications protocols used may vary and may depend on the system characteristics, for instance.

The exemplary system of Figure 1 comprises an example an electric network. The figure shows only components necessary for understanding the invention. The exemplary electric network can be a distribution network, such as a medium voltage (e.g. 20 kV) network. The exemplary electric network of Figure 1 fed through a substation comprising a transformer 10 and a busbar system 20. The phases of the three-phase system are identified as A, B and C. $\overline{U}_0$ is the zero sequence (neutral point) voltage of the example electric network. The figure further shows three electric line outlets, i.e. feeders F1, F2 and F3. Feeder F1 has been illustrated in more detail and shows a control arrangement 30 for a protective arrangement. Such control arrangement 30 may comprise one or more intelligent electronic devices (IED), for example. The exemplary control arrangement 30 is connected to a switching apparatus 32 located at the connection point of feeder F1 to the busbar system 20. The switching apparatus 32 may be controlled by the control arrangement 30 and may comprise suitable switching means, such as one or more circuit breakers, configured to connect and disconnect the phases of the feeder F1 to the busbar system 20, for example. The exemplary control arrangement 30 is further connected to a measuring arrangement 31 located at the connection point of feeder F1 to the busbar system 20. Such measuring arrangement 31 may comprise e.g. current measuring means, such as one or more current transformers or transducers, for measuring various current quantities such as phase currents $\overline{I}_A$, $\overline{I}_B$ and $\overline{I}_C$ of feeder F1. The exemplary measuring arrangement 31 may additionally or alternatively comprise (not shown in the figures) measuring means for other quantities, such as one or more voltage quantities and/or one or more frequency quantities and/or one or more power quantities and/or one or more temperature quantities, for example. As an example, possible voltage measuring means, such as one or more voltage transformers or transducers, could be configured to measure various voltage quantities, such as phase voltages and/or the zero sequence (neutral point) voltage $\overline{U}_0$ of the example electric network.

Figure 1 further illustrates a phase-to-earth fault occurring in phase C in feeder F1. The term 'phase-to-earth fault' herein generally refers to a single phase-to-earth fault. The control arrangement 30 may be configured to detect a fault, such as an earth fault and/or a short-circuit fault, or generally any adverse condition in the feeder F1, on the basis of suitable measurements obtained e.g. by the measuring arrangement 31 and/or received from further entities, and consequently to operate a fault protection of the feeder F1. The operating of the fault protection, or generally operating a protection, may comprise tripping one or more switching devices, such as the switching apparatus 32, in the electric network and/or preventing (blocking) a tripping of one or more switching devices in the electric network. Additionally or alternatively, the operating of the protection may comprise switching off or limiting a fault current and/or signaling an alarm, for example. Switching off the fault current of the detected fault could be performed by switching off the feeder F1, or generally the protected entity or entities, from the feeding point, such as the substation 10, 20, with suitable switching means, such as the switching apparatus 32. It should be noted that there may be any number of feeders or other network elements in the network. There may also be several feeding substations. Further, the embodiments disclosed herein can be utilized with a switching station without a transformer 10, for example. In the exemplary system of Figure 1, the functionality of the various embodiments may be located at least in the control arrangement 30, for example. It is also possible that e.g. only some functions are performed at the location of the control arrangement 30 and the results or data are then transmitted to another unit or units (not shown in the figures) at another location for further processing. It is also noted that while in the example of Figure 1 the protected entity is a feeder of an electric network, such protected entity or a plurality of entities, could be another part of such an electric system or a component connected to electric system or generally any kind of electric device or component or system to be protected, for instance.

While current and/or voltage values and/or values of any other quantities that may be utilized in the various embodiments may be obtained by a suitable measuring arrangement, such as the exemplary measuring arrangement 31, voltage and/or current quantities and/or other quantities may also be measured at different location(s), for instance. In most of the existing protection systems, such values are readily available and thus the implementation of the various embodiments does not necessarily require any additional measuring arrangements or devices. How the possible current and/or voltage values, and/or values of any other quantities possibly needed, are obtained may also depend on the particular electric system and its characteristics. E.g. phase currents $\overline{I}_A$, $\overline{I}_B$ and $\overline{I}_C$ of the feeder F1 of the exemplary electric network and/or other current and/or voltage and/or other quantities possibly needed in the various embodiments may be monitored essentially continuously or the monitoring of at least some quantities may start only upon detecting a fault condition depending on whether pre-fault values for the quantity in question are utilized or not, for instance.

According to a first embodiment, a method comprises a) monitoring a signal indicative of at least one characteristic quantity in the electric system, and b) counting, by a time counter, a time during which a magnitude of the monitored signal equals to or exceeds a first threshold value. Said monitoring and/or counting may be performed essentially continuously or at intervals, for example. The method further comprises c) comparing the magnitude of the monitored signal to a second threshold value. The method further comprises, d) in response to the magnitude of the monitored signal being equal to or smaller than the second threshold value, calculating an operate time on the basis of the magnitude of the monitored signal, and in response to the magnitude of the monitored signal being greater than the second threshold value, calculating the operate time on the basis of the second threshold value. The method further comprises e) comparing the calculated operate time with the time counted by the time counter, and f) in response to the time counted by the time counter being equal to or exceeding the calculated operate time, signalling a trip condition. According to an embodiment, the method may comprise, g) in response to the time counted by the time counter being less than the calculated operate time, repeating steps a) to g). According to an embodiment, steps a) to g) may be repeated until the trip condition is signalled or until determining that the magnitude of the monitored signal has remained below the first threshold value at least for a predetermined time. According to an embodiment, the method may comprise, in response to determining that the magnitude of the monitored signal has remained below the first threshold value at least for the predetermined time, resetting the time counter to zero and repeating steps a) to g).

According to a second embodiment, the method comprises a) monitoring a signal indicative of a characteristic quantity in the electric system, and b) counting, by a time counter, a time during which a magnitude of the monitored signal equals to or remains below a first threshold value. Said monitoring and/or counting may be performed essentially continuously or at intervals, for example. The method further comprises c) comparing the magnitude of the monitored signal to a second threshold value. The method further comprises, d) in response to the magnitude of the monitored signal being equal to or greater than the second threshold value, calculating an operate time on the basis of the magnitude of the monitored signal, and in response to the magnitude of the monitored signal being smaller than the second threshold value, calculating the operate time on the basis of the second threshold value. The method further comprises e) comparing the calculated operate time with the time counted by the time counter, and f) in response to the time counted by the time counter being equal to or exceeding the calculated operate time, signalling a trip condition. According to an embodiment, the method may comprise, g) in response to the time counted by the time counter being less than the calculated operate time, repeating steps a) to g). According to an embodiment, steps a) to g) may be repeated until the trip condition is signalled or until determining that the magnitude of the monitored signal has remained above the first threshold value at least for a predetermined time. According to an embodiment, the method may comprise, in response to determining that the magnitude of the monitored signal has remained above the first threshold value at least for the predetermined time, resetting the time counter to zero and repeating steps a) to g).

According to an embodiment, the at least one characteristic quantity (actuating quantity) may comprise at least one current quantity and/or at least one voltage quantity and/or at least one frequency quantity and/or at least one power quantity and/or at least one temperature quantity, for example. However, the application of the embodiments described herein, or any combination thereof, is not limited to any specific quantity but the at least one characteristic quantity may be any suitable electric quantity or another kind of quantity. Term 'characteristic quantity' herein generally refers to an electric quantity or another quantity, or one of its parameters, which characterizes a protective relay or other protective equipment, device or apparatus, or a protective function or method, and the values of which may be the subject of predetemined requirements or conditions, for example. Some examples of characteristic quantities may include e.g. one or more of the following: the current for an overcurrent or undercurrent relay, the voltage for an overvoltage or undervoltage relay, the frequency for a frequency relay, and the power for a power relay.

The first embodiment described above may be utilized for implementing an overcurrent or overvoltage protection or similar protection intended to be responsive to an over function measure, for example. The second embodiment described above may be utilized for implementing an undercurrent or undervoltage protection or similar protection intended to be responsive to an under function measure, for example.

According to an embodiment, in step d) the operate time may be calculated by using a predetermined inverse time characteristic equation. Examples of inverse time characteristic equations include equations based on inverse time or IDMT characteristic curves defined on a standard, such as IEEE, IEC, ANSI or IAC, and selected for the particular protection operation. More specific examples of such standards include IEEE80 and EN50522, for example. The predetermined inverse time characteristic equation may thus be an equation (formula) defined in a standard or e.g. an equation (formula) which models a characteristic curve defined in a standard, for example. The inverse time characteristic equation may also be user defined, for example. According to an embodiment, the second threshold value may be determined by using the same predetermined inverse time characteristic equation such that the second threshold value is a signal magnitude corresponding to a defined minimum (operate) time. In other words, when the defined minimum time is known, the corresponding signal magnitude can be calculated by using the inverse time characteristic equation, which defines the relationship between the time and the signal magnitude for the inverse time portion of the IDMT characteristic curve, for example.

According to the first embodiment, an apparatus for protection in an electric system comprises monitoring means configured to monitor a signal indicative of at least one characteristic quantity in the electric system and a time counter configured to count a time during which a magnitude of the monitored signal equals to or exceeds a first threshold value. Moreover, the apparatus comprises calculation means configured to compare the magnitude of the signal monitored by the monitoring means to a second threshold value, in response to the magnitude of the signal monitored by the monitoring means being equal to or smaller than the second threshold value, calculate an operate time on the basis of the magnitude of the signal monitored by the monitoring means, and in response to the magnitude of the signal monitored by the monitoring means being greater than the second threshold value, calculate the operate time on the basis of the second threshold value. Moreover, the calculation means are configured to compare the calculated operate time with the time counted by the time counter, and in response to the time counted by the time counter being equal to or exceeding the calculated operate time, signal a trip condition.

According to the second embodiment, an apparatus for protection in an electric system comprises monitoring means configured to monitor a signal indicative of at least one characteristic quantity in the electric system and a time counter configured to count a time during which a magnitude of the monitored signal equals to or remains below a first threshold value. Moreover, the apparatus comprises calculation means configured to compare the magnitude of the signal monitored by the monitoring means to a second threshold value, in response to the magnitude of the signal monitored by the monitoring means being equal to or greater than the second threshold value, calculate an operate time on the basis of the magnitude of the signal monitored by the monitoring means, and in response to the magnitude of the signal monitored by the monitoring means being smaller than the second threshold value, calculate the operate time on the basis of the second threshold value. Moreover, the calculation means are configured to compare the calculated operate time with the time counted by the time counter, and in response to the time counted by the time counter being equal to or exceeding the calculated operate time, signal a trip condition.

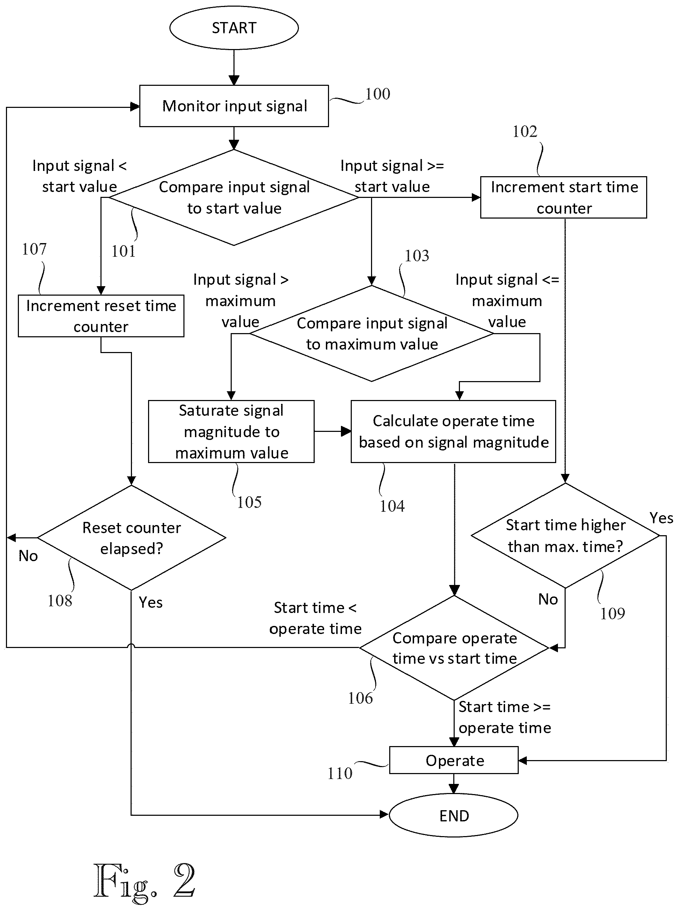

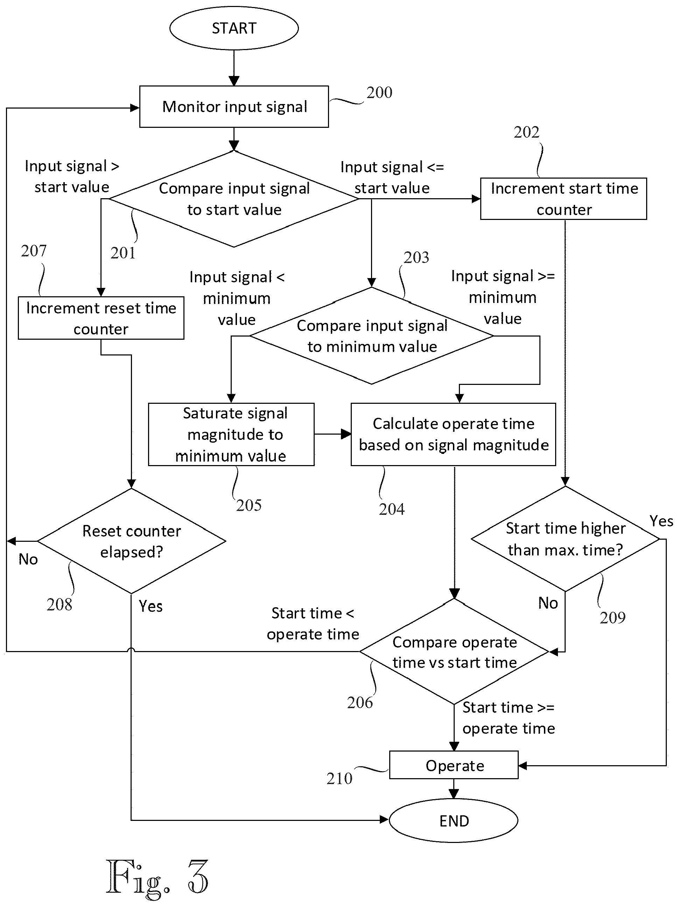

Figures 2 and 3 show a diagrams according to embodiments, examples of which are described in the following. The embodiment of Figure 3 corresponds to that of Figure 2 except that, while in Figure 2 the resulting functionality represents an over function operation, in Figure 3 the resulting functionality represents an under function operation.

According to an embodiment, an execution of the exemplary routine, or a portion thereof, may be essentially continuous and/or it can be triggered based on e.g. monitoring needs, such as criticality of an application, variation of the parameters, etc., and/or any other trigger possibly depending on the characteristics of the system in question. Consequently, the execution of the routine, i.e. START, could begin upon start up of the protective arrangement or in response to detecting a fault condition in the electric system, for example. As an example, in case of protection against earth-faults, such start condition could be triggered by the zero sequence (neutral point) voltage $\bar{U}_0$ of the example electric network exceeding a predetermined threshold voltage indicating a possible presence of a fault somewhere in the electric network.

According to an embodiment as exemplified in Figure 2, input signal is monitored 100, which input signal is indicative of a characteristic quantity in the electric system. According to an embodiment, such characteristic quantity may be a fault current estimate, such as an earth-fault current or an earth-fault current estimate in case the protection is intended against earth-faults and a short-circuit current or a short-circuit current estimate in case the protection is intended against earth-faults, for example. However, any other characteristic quantity or quantities could be used depending on the type and purpose of the intended protection. The input signal indicative of e.g. the current quantity may be selected based on the intended use of an overcurrent protection according to any of the embodiments described herein. As an example, in case of earth-fault protection, the input signal could be an earth-fault current estimate as follows:

$$\bar{I}Fest = 3 \cdot \Delta\bar{I}_2 = \Delta\bar{I}_A + \bar{a}^2 \cdot \Delta\bar{I}_B + \bar{a} \cdot \Delta\bar{I}_C$$

$$IFest = abs(\bar{I}Fest)$$

*Where*

$\bar{I}Fest$ = *Earth-fault current estimate (phasor)*
*IFest= Earth-fault current estimate (magnitude)*

$\Delta\bar{I}_A = \bar{I}_A(t_{FLT}) - \bar{I}_A(t_{PRE\_FLT})$ = *change of phase A current phasor due to earth fault*

$\Delta\bar{I}_B = \bar{I}_B(t_{FLT}) - \bar{I}_B(t_{PRE\_FLT})$ = *change of phase B current phasor due to earth fault*

$\Delta\bar{I}_C = \bar{I}_C(t_{FLT}) - \bar{I}_C(t_{PRE\_FLT})$ = *change of phase C current phasor due to earth fault*

$\Delta\bar{I}_2 = \bar{I}_2(t_{FLT}) - \bar{I}_2(t_{PRE\_FLT})$ = *change of negative sequence-current phasor due to earth fault*

$\bar{a}$ = *Phase rotation operator* = cos(120º) + j·sin(120º), *when the system phase rotation direction is: ABC.*

The use of the measurable change due to an earth fault at phase current phasors enables accurate estimation of the earth-fault current. However, also other current quantities or generally other quantities could be used instead.

In 101 the input signal, e.g. its magnitude, is compared to a first threshold value, i.e. a start value. If the input signal magnitude is equal to or higher than the start value, in 102 a start time counter is incremented. Optionally, in 109 the time counted by the start time counter may be compared to a predetermined maximum time, and if the time counted by the start time counter exceeds the predetermined maximum time, an overcurrent trip condition may be signalled in 110. In 103, which may be performed in parallel or simultaneously with 102, the magnitude of the input signal is compared to a second threshold value, i.e. a predefined maximum value. If the magnitude of the input signal is equal to or smaller than the maximum value, an operate time is calculated in 104 on the basis of the magnitude the input signal. If, however, the magnitude of the input signal is greater than the maximum value, the signal magnitude is saturated to the maximum value in 105, and consequently the operate time is calculated in 104 on the basis of the magnitude the input signal which equals to the maximum value. The calculated operate time is compared with the time counted by the start time counter in 106. If the time counted by the start time counter is equal to or exceeds the calculated operate time, a trip condition, e.g. an overcurrent trip condition, is signalled in 110. And if the time counted by the start time counter is less than the calculated operate time, the routine continues from 100. Moreover, if in 101 it is determined that the magnitude of the input signal is lower than the first threshold value, a reset time counter is incremented in 107. In 108 it is determined whether the reset counter has elapsed. If yes, then the routine may end, and if not, then the routine may continue from 100. It is alternatively possible that if in 108 it is determined that the reset counter has elapsed, then the start timer is reset to zero and the routine may continue from 100. According to an embodiment, if the routine proceeds to END, it may proceed back to START such that the start time counter is reset to zero.

According to an embodiment, in 104 the operate time may be calculated by using a predetermined inverse time characteristic equation. According to an embodiment, the maximum value is determined by using the same predetermined inverse time characteristic equation as is used in 104, such that the second threshold value is a signal magnitude corresponding to a predefined minimum time. According to an embodiment, also the reset time could be calculated based on a predefined (e.g. a user defined or standard defined) equation, and in that case the calculated reset equation time should be decremented from the calculated operate time in 104 before comparison 106 to start time counter. Furthermore, in this embodiment also the start time counter may be affected by decremental steps during reset. According to an embodiment, in 110 the signalling of the trip condition may comprise tripping or operating protection in the electric system in response to the signalling of the trip condition.

According to another embodiment as exemplified in Figure 3, input signal is monitored 200 similarly to 100 described above. In 201 the input signal, e.g. its magnitude, is compared to a first threshold value, i.e. a start value. If the input signal magnitude is equal to or lower than the start value, in 202 a start time counter is incremented. Optionally, in 209 the time counted by the start time counter may be compared to a predetermined maximum time, and if the time counted by the start time counter exceeds the predetermined maximum time, an overcurrent trip condition may be signalled in 210. In 203, which may be performed in parallel or simultaneously with 202, the magnitude of the input signal is compared to a second threshold value, i.e. a predefined minimum value. If the magnitude of the input signal is equal to or greater than the minimum value, an operate time is calculated in 204 on the basis of the magnitude the input signal. If, however, the magnitude of the input signal is smaller than the minimum value, the signal magnitude is saturated to the minimum value in 205, and consequently the operate time is calculated in 204 on the basis of the magnitude the input signal which equals to the minimum value. The calculated operate time is compared with the time counted by the start time counter in 206. If the time counted by the start time counter is equal to or exceeds the calculated operate time, a trip condition, e.g. an undercurrent trip condition, is signalled in 210. And if the time counted by the start time counter is less than the calculated operate time, the routine continues from 200. Moreover, if in 201 it is determined that the magnitude of the input signal is higher than the first threshold value, a reset time counter is incremented in 207. In 208 it is determined whether the reset counter has elapsed. If yes, then the routine may end, and if not, then the routine may continue from 200. It is alternatively possible that if in 208 it is determined that the reset counter has elapsed, then the start timer is reset to zero and the routine may continue from 200. According to an embodiment, if the routine proceeds to END, it may proceed back to START such that the start time counter is reset to zero.

According to an embodiment, in 204 the operate time may be calculated similarly as in 104 as described above by using a predetermined inverse time characteristic equation. According to an embodiment, in 210 the signalling of the trip condition, similarly to 110, may comprise tripping or operating protection in the electric system in response to the signalling of the trip condition.

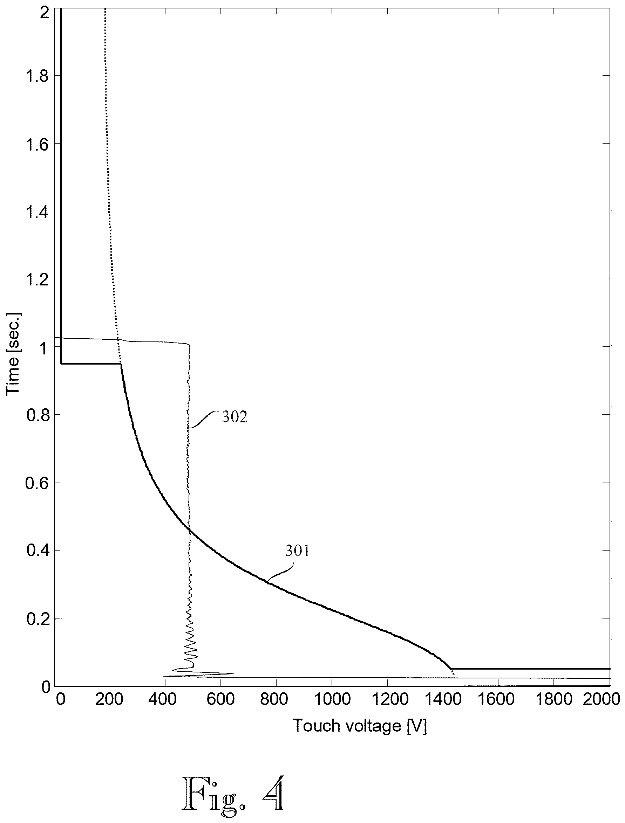

Figure 4 shows a diagram illustrating an embodiment. In Figure 4, the inverse time portion of curve 301 is based on EN50522 2Utp trip curve supplemented with the minimum operate time and maximum operate time limits shown as the flat portions of the curve, and curve 302 is an example of an estimated touch voltage $U_{Eest} = I_{Fest}*R_e$, where $R_e$ is a predetermined earthing resistance of the electric system. Consequently, when $R_e$ is a predetermined value, the touch voltage $U_e$, or the estimated touch voltage $U_{Eest}$, and the current quantity $I_{Fest}$, i.e. an earth-fault current estimate (generally a current that causes earth potential rise) are in a known relationship with each other and thus also indicative of each other. Consequently, the signal used for implementing the protection could be either the touch voltage $U_e$, or the estimate $U_{Eest}$ thereof, or the earth-fault current estimate $I_{Fest}$, for example. According to this example, the predetermined inverse time characteristic equation may be that corresponding to the inverse time portion of curve 301, i.e. EN50522 2Utp trip curve. Thus, according to an embodiment, the operate time may be calculated by inverse time characteristic equation t=f($U_{Eest}$), where the equation may be based on e.g. said EN50522 2Utp trip curve or another suitable inverse time characteristic curve, for example. According to an embodiment, a predetermined maximum touch voltage may be used to determine the minimum operate time such that this maximum touch voltage produces a defined operate time if, throughout a fault, up to the minimum operate time, the signal reaches that maximum touch voltage. The actual operate time may then be obtained by calculating the operate time generated by the input signal from the equation t=f($U_{Eest}$) and comparing this time with the duration of the fault that has elapsed. If the calculated operate time matches the elapsed time, then the operation may be signalled or activated. If the elapsed time is still not long enough, then the calculation of the signal and the comparison may be performed repeatedly. As can be seen from the example of Figure 3, which represents a simulated situation, the initial transient in curve 302 representing the touch voltage signal, does not cause action (curve 302 does not intersect with curve 301). The activation takes place shortly before 0.5 s when curves 301 and 302 finally intersect. An advantage of protection based on the (estimated) touch voltage $U_{Eest}$ as described in the example above is that it provides a simple way for a user or operator of the system to visualize protection timing correctness by plotting or otherwise observing signal magnitude versus operate time, for example.

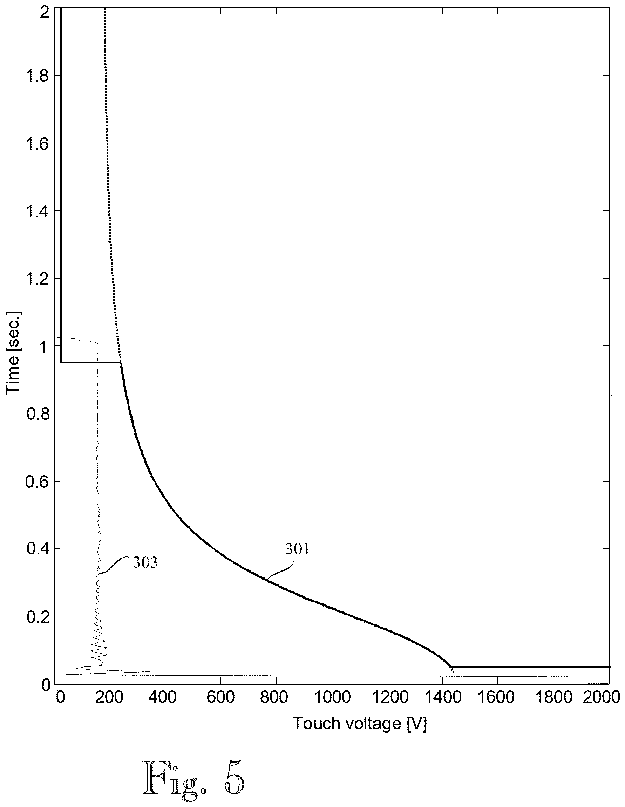

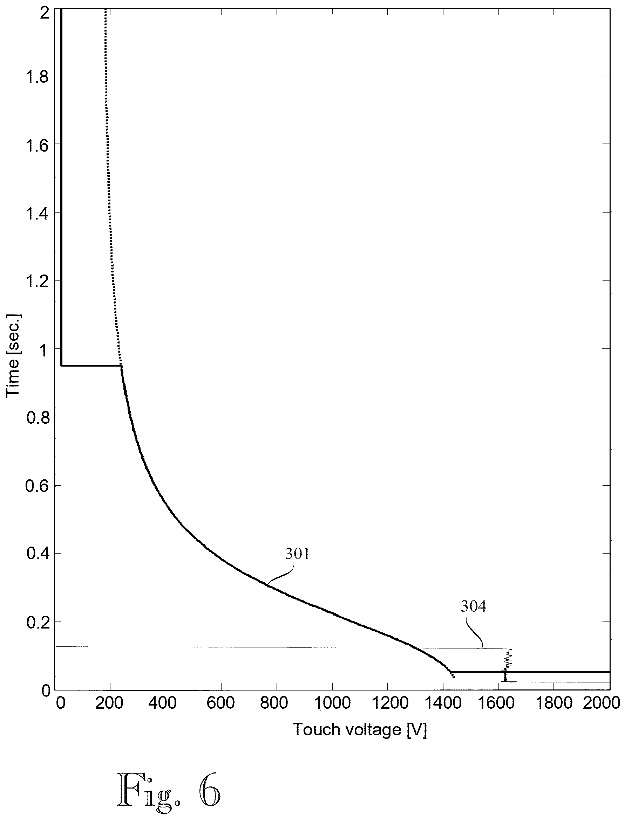

Figure 5 shows a diagram illustrating an embodiment. In Figure 5, curve 301 corresponds to that of Figure 4 and curve 303 is another example of the estimated touch voltage $U_{Eest} = I_{Fest} * R_e$, where $R_e$ is the predetermined earthing resistance of the electric system. In the example of Figure 5, the activation takes place at the maximum time defined by curve 301, when curves 301 and 303 intersect. Figure 6 shows a diagram illustrating an embodiment. In Figure 6, curve 301 corresponds to that of Figure 4 and curve 304 is yet another example of the estimated touch voltage $U_{Eest} = I_{Fest} * R_e$, where $R_e$ is the predetermined earthing resistance of the electric system. In the example of Figure 6, the activation takes place at the minimum time defined by curve 301, when curves 301 and 304 intersect.

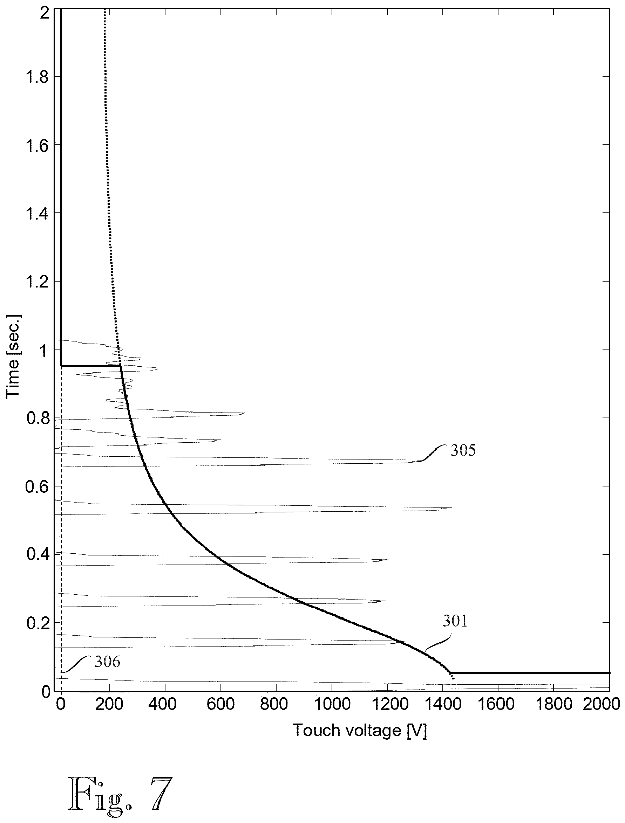

Figure 7 shows a diagram illustrating an embodiment. In Figure 7, curve 301 corresponds to that of Figure 4 and curve 305 is another example of the estimated touch voltage $U_{Eest} = I_{Fest} * R_e$, where $R_e$ is the predetermined earthing resistance of the electric system. In the example of Figure 7 the touch voltage curve 305 represents a restriking fault causing the peaks or pulses in the signal as shown in the figure. According to an embodiment, a complementary protection functionality for such restriking faults may be used in combination with any of the embodiments described above. Such additional protection functionality may be implemented by counting the number of occasions when the signal magnitude, e.g. the touch voltage 305 as in Figure 7, goes below the start value, which is shown as a dashed line 306 in the example of Figure 7. Then, a trip condition may be signalled in response to the counted number of such occasions exceeding a predetermined threshold number, for example.

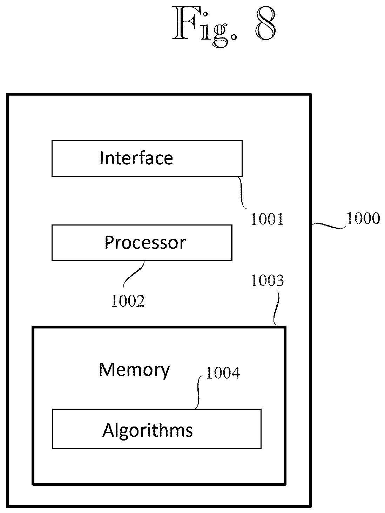

The control arrangement 30 or other means for implementing at least part of the functionality according to any one of the embodiments herein, or a combination thereof, may be implemented as one physical unit or as two or more separate physical units that are configured to implement the functionality. Herein the term 'unit' generally refers to a physical or logical entity, such as a physical device or a part thereof or a software routine. Figure 8 is a simplified block diagram illustrating some units for an apparatus (device, equipment) 1000 configured to perform at least some functionality of the control arrangement 30 or corresponding apparatus. In the illustrated example, the apparatus 1000 comprises one or more interface (IF) entities 1001, such as one or more user interfaces and/or data interfaces, and one or more processing entities 1002 connected to various interface entities 1001 and to one or more memories 1003. The one or more interface entities 1001 may be entities for receiving and transmitting information, such as communication interfaces comprising hardware and/or software for realising communication connectivity according to one or more communication protocols, or for realising data, e.g. measuring data, storing and fetching, and/or for providing user interaction via one or more user interfaces. A processing entity 1002 is capable to perform calculations and configured to implement at least part of functionalities/operations described above, with corresponding algorithms 1004 stored in the memory 1003. The processing entity 1002 may include one or more processors, controllers, control units, microcontrollers, etc. configurable to carry out e.g. embodiments, examples, implementations and/or operations described above. Generally, a processor may be a central processing unit, but the processor entity 1002 may be an additional operation processor or a multicore processor or a microprocessor, for instance. A memory 1003 may be usable for storing a computer program code required for one or more functionalities/operations described above, that is, the algorithms 1004 for implementing the functionality/operations described above. The memory 1003 may also be usable for storing, at least temporarily, other possible information required for one or more functionalities/operations described above. The memory 1003 may comprise a data buffer that may, at least temporarily, store for example measurement data and/or information received as a user input. The apparatus comprising the monitoring means, the time counter and the calculation means may be implemented at least partly by means by such apparatus 1000 as exemplified in Figure 8.

Generally, the control arrangement 30 or other means for implementing at least part of the functionality according to any one of the embodiments herein may be implemented at least partly by means of one or more computers or corresponding digital signal processing (DSP) equipment provided with suitable software, for example. Such a computer or digital signal processing equipment preferably comprises at least a working memory (RAM) providing storage area for arithmetical operations, and a central processing unit (CPU), such as a general-purpose digital signal processor. The CPU may comprise a set of registers, an arithmetic logic unit, and a control unit. The CPU control unit is controlled by a sequence of program instructions transferred to the CPU from the RAM. The CPU control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system which may provide system services to a computer program written with the program instructions. The computer or other apparatus implementing the various embodiments, or a part thereof, may further comprise suitable input means for receiving e.g. measurement and/or control data, and output means for outputting e.g. control or any other data, such as the determined thermal load. It is also possible to use a specific integrated circuit or circuits, such as application-specific integrated circuits (ASIC), digital signal processing devices (DSPD), programmable logic devices (PLD), field-programmable gate arrays (FPGA) and/or discrete electric components and devices for implementing the functionality according to any one of the embodiments.

Many electric devices, such as electric power systems, and components thereof, such as protective relays or intelligent electronic devices, may comprise processors and memory that may be utilized in implementing the functionality according to the various embodiments described herein. Thus, at least some modifications and configurations possibly required for implementing an embodiment could be performed as software routines, which may be implemented as added or updated software routines. If at least part of the functionality of any of the embodiments is implemented by software, such software may be provided as a computer program product comprising computer program code which, when run on a computer, causes the computer or corresponding arrangement to perform the functionality according to the embodiments as described herein. Such a computer program code may be stored or generally embodied on a computer readable medium, such as suitable memory, e.g. a flash memory or an optical memory, from which it is loadable to the unit or units executing the program code. In addition, such a computer program code implementing any of the embodiments may be loaded to the unit or units executing the computer program code via a suitable data network, for example, and it may replace or update a possibly existing program code. An embodiment may provide a computer program embodied on any client-readable distribution/data storage medium or memory unit(s) or article(s) of manufacture, comprising program instructions executable by one or more processors/computers, which instructions, when loaded into an apparatus, constitute the control arrangement, or any corresponding unit or an entity providing corresponding functionality, or at least part of the corresponding functionality. Programs, also called program products, including software routines, program snippets constituting "program libraries", applets and macros, can be stored in any medium and may be downloaded into an apparatus. In other words, each or some or one of the possible units/sub-units and/or algorithms for one or more functions/operations described above, for example by means of any of Figures 1 to 8 and any combination thereof, may be an element that comprises one or more arithmetic logic units, a number of special registers and control circuits.

It will be obvious to a person skilled in the art that, as the technology advances, the inventive concept can be implemented in various ways. The invention and its embodiments are not limited to the examples described above but may vary within the scope of the claims.

**Claims**

1.   A method for protection in an electric system, the method comprising:

a) monitoring a signal indicative of at least one characteristic quantity in the electric system;
b1) counting, by a time counter, a time during which a magnitude of the monitored signal equals to or exceeds a first threshold value, or b2) counting, by the time counter, a time during which the magnitude of the monitored signal equals to or remains below the first threshold value;
c) comparing the magnitude of the monitored signal to a second threshold value;
d) as per alternative b1), in response to the magnitude of the monitored signal being equal to or smaller than the second threshold value, calculating an operate time on the basis of the magnitude of the monitored signal, and in response to the magnitude of the monitored signal being greater than the second threshold value, calculating the operate time on the basis of the second threshold value, or as per alternative b2), in response to the magnitude of the monitored signal being equal to or greater than the second threshold value, calculating the operate time on the basis of the magnitude of the monitored signal, and in response to the magnitude of the monitored signal being smaller than the second threshold value, calculating the operate time on the basis of the second threshold value;

e) comparing the calculated operate time with the time counted by the time counter; and
f) in response to the time counted by the time counter being equal to or exceeding the calculated operate time, signalling a trip condition.

2. A method as claimed in claim 1, further comprising:
g) in response to the time counted by the time counter being less than the calculated operate time, repeating steps a) to g).

3. A method as claimed in claim 2, wherein

as per alternative b1), steps a) to g) are repeated until the trip condition is signalled or until determining that the magnitude of the monitored signal has remained below the first threshold value at least for a predetermined time, or
as per alternative b2), steps a) to g) are repeated until the trip condition is signalled or until determining that the magnitude of the monitored signal has remained above the first threshold value at least for a predetermined time.

4. A method as claimed in claim 3, further comprising:

as per alternative b1), in response to determining that the magnitude of the monitored signal has remained below the first threshold value at least for the predetermined time, resetting the time counter to zero and repeating steps a) to g), or
as per alternative b2), in response to determining that the magnitude of the monitored signal has remained above the first threshold value at least for the predetermined time, resetting the time counter to zero and repeating steps a) to g).

5. A method as claimed in any one of claims 1 to 4, wherein in step d) the operate time is calculated by using a predetermined inverse time characteristic equation.

6. A method as claimed in claim 5, wherein the second threshold value is determined by using the same predetermined inverse time characteristic equation such that the second threshold value is a signal magnitude corresponding to a defined minimum time.

7. A method as claimed in any one of claims 1 to 6, wherein step f) comprises tripping protection in the electric system in response to the signalling of the trip condition.

8. A computer readable medium comprising program instructions for causing a computing apparatus connected to an electric system to carry out a method according to any preceding claim 1 to 7.

9. An apparatus for protection in an electric system, the apparatus comprising:

monitoring means configured to monitor a signal indicative of at least one characteristic quantity in the electric system;
1a) a time counter configured to count a time during which a magnitude of the monitored signal equals to or exceeds a first threshold value, or 1b) a time counter configured to count a time during which a magnitude of the monitored signal equals to or remains below the first threshold value; and
calculation means configured to:

2) compare the magnitude of the signal monitored by the monitoring means to a second threshold value;
3) as per alternative 1a), in response to the magnitude of the signal monitored by the monitoring means being equal to or smaller than the second threshold value, calculate an operate time on the basis of the magnitude of the signal monitored by the monitoring means, and in response to the magnitude of the signal monitored by the monitoring means being greater than the second threshold value, calculate the operate time on the basis of the second threshold value, or as per alternative 1b), in response to the magnitude of the signal monitored by the monitoring means being equal to or greater than the second threshold value, calculate an operate time on the basis of the magnitude of the signal monitored by the monitoring means, and in response to the magnitude of the signal monitored by the monitoring means being smaller than the second threshold value, calculate the operate time on the basis of the second threshold value;
4) compare the calculated operate time with the time counted by the time counter; and

5) in response to the time counted by the time counter being equal to or exceeding the calculated operate time, signal a trip condition.

**10.** An apparatus as claimed in claim 9, wherein the calculation means are further configured to, in response to the time counted by the time counter being less than the calculated operate time, repeat 2) to 5).

**11.** An apparatus as claimed in claim 10, wherein

as per alternative 1a), the calculation means are configured to repeat 2) to 5) until the trip condition is signalled or until determining by the calculation means that the magnitude of the signal monitored by the monitoring means has remained below the first threshold value at least for a predetermined time, or
as per alternative 1b), the calculation means are configured to repeat 2) to 5) until the trip condition is signalled or until determining by the calculation means that the magnitude of the signal monitored by the monitoring means has remained above the first threshold value at least for a predetermined time.

**12.** An apparatus as claimed in claim 11, wherein the calculation means are further configured to:

as per alternative 1a), in response to determining that the magnitude of the signal monitored by the monitoring means has remained below the first threshold value at least for the predetermined time, reset the time counted by the time counter to zero and repeat 2) to 5), or
as per alternative 1b), in response to determining that the magnitude of the signal monitored by the monitoring means has remained above the first threshold value at least for the predetermined time, reset the time counted by the time counter to zero and repeat 2) to 5).

**13.** An apparatus as claimed in any one of claims 9 to 12, wherein the calculation means are configured to calculate the operate time by using a predetermined inverse time characteristic equation.

**14.** An apparatus as claimed in claim 13, wherein the second threshold value is determined by using the same predetermined inverse time characteristic equation such that the second threshold value is a signal magnitude corresponding to a defined minimum time.

**15.** An apparatus as claimed in any one of claims 9 to 14, further comprising tripping means configured to cause tripping of protection in the electric system in response to the signalling of the trip condition.

**16.** An apparatus as claimed in any one of claims 9 to 14, wherein the at least one characteristic quantity comprises at least one current quantity and/or at least one voltage quantity and/or at least one frequency quantity and/or at least one power quantity and/or at least one temperature quantity.

Fig. 1

Fig. 2

Fig. 3

Fig. 4

Fig. 5

Fig. 6

Fig. 7

# Fig. 8

Interface

1001

1000

Processor

1002

1003

Memory 1004

Algorithms

Europäisches
Patentamt

European
Patent Office

Office européen
des brevets

# EUROPEAN SEARCH REPORT

Application Number

EP 22 21 7133

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2011/295529 A1 (VANHALA KARI [FI] ET AL) 1 December 2011 (2011-12-01) * paragraphs [0028], [0052], [0057], [0058], [0063] – [0074]; figures 6A,6B * | 1-16 | INV. H02H3/08 H02H3/093 H02H3/10 |
| A | US 2012/236452 A1 (VANHALA KARI [FI] ET AL) 20 September 2012 (2012-09-20) * paragraphs [0024], [0049] * | 1-16 | |
| A | US 2012/212348 A1 (SUBRAMANIAN SANKARA [GB] ET AL) 23 August 2012 (2012-08-23) * paragraph [0039] * | 1-16 | |

TECHNICAL FIELDS
SEARCHED        (IPC)

H02H

The present search report has been drawn up for all claims

| Place of search | Date of completion of the search | Examiner |
|---|---|---|
| Munich | 21 June 2023 | Ramcke, Ties |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
  ......................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 22 21 7133

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2023

| Patent document cited in search report | | Publication date | Patent family member(s) | | Publication date |
|---|---|---|---|---|---|
| US 2011295529 | A1 | 01-12-2011 | CN | 102273034 A | 07-12-2011 |
| | | | EP | 2382698 A1 | 02-11-2011 |
| | | | RU | 2011132621 A | 20-02-2013 |
| | | | US | 2011295529 A1 | 01-12-2011 |
| | | | WO | 2010079256 A1 | 15-07-2010 |
| US 2012236452 | A1 | 20-09-2012 | CN | 102684154 A | 19-09-2012 |
| | | | EP | 2501008 A1 | 19-09-2012 |
| | | | US | 2012236452 A1 | 20-09-2012 |
| US 2012212348 | A1 | 23-08-2012 | CA | 2779513 A1 | 12-05-2011 |
| | | | CN | 102763297 A | 31-10-2012 |
| | | | EP | 2497175 A1 | 12-09-2012 |
| | | | US | 2012212348 A1 | 23-08-2012 |
| | | | WO | 2011054385 A1 | 12-05-2011 |

EPO FORM P0459

For more details about this annex : see Official Journal of the European Patent Office, No. 12/82